(19) Europäisches Patentamt
European Patent Office
Office européen des brevets

(11) **EP 2 631 546 A1**

(12) **EUROPEAN PATENT APPLICATION**
published in accordance with Art. 153(4) EPC

(43) Date of publication:
**28.08.2013 Bulletin 2013/35**

(51) Int Cl.:
*F24D 3/08* (2006.01)   *F24D 3/18* (2006.01)
*F25B 30/00* (2006.01)

(21) Application number: **11834706.1**

(22) Date of filing: **18.10.2011**

(86) International application number:
**PCT/RU2011/000811**

(87) International publication number:
**WO 2012/053937 (26.04.2012 Gazette 2012/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.06.2011   RU 2011123914
19.10.2010   RU 2010142460**

(71) Applicants:
• **Petin, Yury Markovicha
Novosibirsk 630116 (RU)**
• **Shamanaev, Sergei Nikolaevich
Novosibirskaya obl. 633009 (RU)**
• **Oparin, Evgeny Viktorovich
Novosibirsk 630090 (RU)**
• **Golodnikov, Boris Stepanovich
Novosibirskaya obl. 632864 (RU)**

(72) Inventors:
• **Petin, Yury Markovicha
Novosibirsk 630116 (RU)**
• **Shamanaev, Sergei Nikolaevich
Novosibirskaya obl. 633009 (RU)**
• **Oparin, Evgeny Viktorovich
Novosibirsk 630090 (RU)**
• **Golodnikov, Boris Stepanovich
Novosibirskaya obl. 632864 (RU)**

(74) Representative: **HOFFMANN EITLE
Patent- und Rechtsanwälte
Arabellastrasse 4
81925 München (DE)**

(54) **METHOD FOR SUPPLYING HOT WATER AND HEATING METHOD USING SAID METHOD**

(57)    The invention relates to the use of heat pumps for supplying hot water and for heating. The method for supplying hot water comprises supplying water to a heat pump circuit, heating said water to a standard temperature with the aid of heat pumps and delivering the heated water to consumers. Each heat pump is used as a consecutive heating stage with a heat pump cycle similar to a triangular Lorentz cycle, selecting the temperature of the water supplied for heating in the first stage heat pump, and adjusting each heat pump to the condensation temperature of the working fluid thereof taking into account the heat given off by said stage. The heating method uses all of the operations of the method for supplying hot water. The heated water is delivered to a consumer circuit, to which the water is supplied, depending on the temperature of the external air, with the aid of a regulator(s) that connects up heating equipment and/or an air heat exchanger in a room, where said water is cooled by the external air to the temperature selected for this cycle and is supplied for heating in the first stage heat pump, and the heated air is supplied to the room. The invention makes it possible to increase the technical and economic efficiency by operating in a selected cycle.

Fig. 1

**Description**

Technical Field

The invention relates to the heat-power engineering, in particular, to the heat supply, using the heat pumps to heat water, and can be used for hot water supply or space heating of residential accommodations or shop facilities.

Background Art

The methods for heat supply are known including supply of water for heating into the system, heating of water with one heat pump, and delivery of the heated water to the consumers. To improve the thermal energy transformation efficiency, various techniques can be used. For example, in the method of obtaining the maximum heating rate of the heat pumps by the patent RU 2083932, the cooling agent of a heat pump is selected so that its critical temperature would be close/equal to the temperature of the medium being cooled. Before the compression, the selected cooling agent is brought into the critical state, and the compressing is performed up to the state corresponding to the Boyle point. In the method of the thermal energy transformation according to patent RU 2161759, the energy efficiency of the transformation is improved by means of reducing the specific electric power consumption, for what purpose the operating fluid just after the compressor is directed to a jet device, where it is mixed-up with a liquid flow coming from the separator located after the condenser. The operating fluid from the jet device is directed to the condenser, where it is cooled down, transferring the heat to a high-temperature receiver.

These known methods allow achieving transformation ratios maximally improved for the systems with one heat pump, but do not exceed this level. It is due to the fact that the heat pump of the system operates by the heat pump cycle far from the triangular heat pump Lorenz cycle, the most efficient operating cycle in the refrigeration and heat pump engineering. As a result, the known methods do not provide any significant cost reduction of the heat, specific electric power consumption, and payback periods of the heat pump systems implementing such methods.

The closest to the present invention is a method of heat supply, including water supply for heating in a heat pump plant of the system, heating of water with the aid of said plant, and delivery of hot water to the consumers. The heat pump plant comprises the heat pumps, each of which is used as a consecutive heating stage of water heating (G. Heinrich, H. Nairock, V. Nestler. Heat Pump Plants for Heating and Hot Water Supply, Moscow, Stroyizdat, 1985, p.p. 53-56).

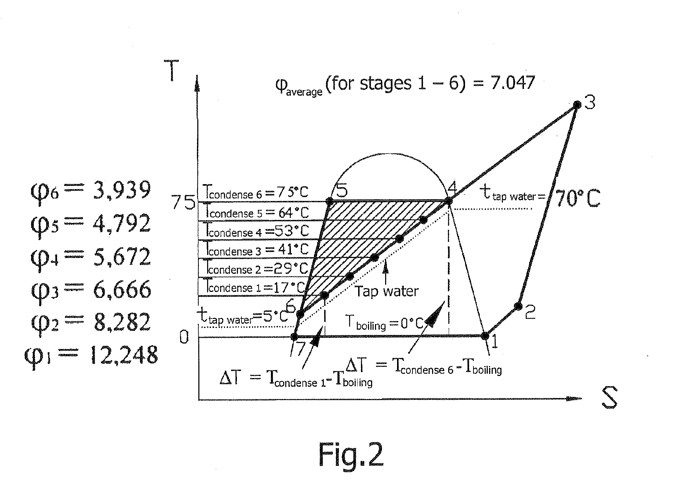

A drawback of the known method is an organization of operation of the said heat pump plant by a heat pump cycle proximate to the quadrangular heat-pump Lorenz cycle (ibid., p. 54, Fig. 2.19), which, although it provides energy savings, but decreases the transformation ratio and increases the payback period to the value exceeding the economically viable period, while improving the capital cost. Thus, realization of the known method for heat supply with a stage heating of water does not provide for positive technical and economic results.

When using the known heat supply method for heating, operation of the staged heat pump plant runs with large throttling losses of the operating fluid of the heat pumps, which worsens the already poor performance of its work. Besides, the higher the condensation temperature of the operating fluid, the higher are the operating fluid throttling losses that cannot be eliminated by means of design. According to calculations, the payback period of the heating system in such a case increases to more than 33 years, making the implementation of such a method of heating the technically and economically unviable.

An object of the present invention is to improve the technical and economic efficiency:

- by means of providing during the staged water heating of a heat-pump cycle maximally similar to the triangular heat pump Lorenz cycle, which allows not only the heat pumps of an autonomous hot water supply system, but also heat pumps of an indirect heating system to work with beneficial use of practically all produced heat-pump heat at the expense of operation of the heat-pump circuit and all the heating system in general with the minimum throttling losses; moreover, the said technical result is available in the regions with various climatic conditions, including the areas with an outdoor air temperature lower than -40°C, by using water-air / air heating systems;
- by means of beneficial use of a part of heat of the heated air in the heated room during the heating system operation;
- due to possibility of working for heating at the specified heated (delivery) water temperature not over +75°C for any outdoor air temperature, even lower than -40°C, due to usage of the return water heat.

Summary of Invention

The objective is achieved in the hot water supply method, comprising supply of water for heating to the heat-pump circuit of the system, heating therein said water up to the specified temperature with the help of the heat pumps, each one of which is used as a consecutive water heating stage, and delivery of the heated water for the customers.

According to the invention, for heating-up of water in a heat-pump circuit of the system, a heat-pump cycle is organized, maximally similar to the triangular heat pump Lorenz cycle. With this aim in view, the temperature of water, supplied for heating into the heat pump of the first stage, is selected maximally close to the boiling point of its operating fluid, and heat pump of each stage is adjusted to the condensation temperature of its operating fluid, at which the heat $Q_i$ given off by the stage, satisfies the condition:

$$Q_i \approx \frac{1}{n} \times Q_{output},$$

where:

i - sequence number of a heating stage;

$Q_{output}$ - total heat obtained from all the heating stages at the output of the last stage;

n - total number of the heating stages.

Such a method when realized allows for arranging, in order of heating water in a heat-pump circuit having n consecutive heating stages, a heat-pump cycle, maximally close to the triangular heat pump Lorenz cycle, providing thereby operation of an autonomous hot water supply system in a mode with beneficial usage of practically all the heat produced by the pumps. According to calculations, this ensures high technical and economic performance of the heat-pump cycle: $\varphi$ transformation ratio, considerably exceeding the same ratio not only of the traditional hot water supply systems (with one heat pump), but also of the staged hot water supply systems operating by cycle similar to the quadrangular heat pump Lorenz cycle, as well as lower specific electric power consumption $N_{e\ spec.\ aver.}$ and a payback period PBP, within economical validity range, but most importantly, a considerably lower produced heat cost $C_{heat}$ aver., even if compared with the traditional heat sources for the hot water supply (boiler stations and combined heat and power plants (CHPs)). The achievable parameters of the heat-pump cycle suggest improvement of the technical and economical efficiency of the present method for supplying hot water compared to the above-mentioned closest analog.

Preferably, the number of water heating stages should be selected equal from four to six. According to the calculations, with such number of stages, thermal energy transformation efficiency improvement is preserved at low capital cost, low payback period and low cost of the produced heat. If the number of stages is less than four, the payback period and the prime cost of heat increase, and if the number of stages is more than six, the payback period and capital costs increase.

It is also preferable to choose temperature of water supplied for heating to the first stage heat pump, in a range from 0°C to +15°C, since this is the initial temperature of water supplied for heating will be maximally close to the boiling point of the operating fluid of this heat pump, and this temperature is usually 7°C to 10°C lower than the temperature of a low grade heat source, which, in general, is from +7°C to +25°C. This stipulation for a stage heating and the said settings of the heat pumps allows for meeting the requirement of beneficial use of almost all heat produced by the pumps.

It is preferable during heating of water to switch to reverse the heat-pump circuit with the help of flow-diversion controllers located at the inlets of the heat pumps of the first and the last stages of heating.

With such realization of the method it is possible to increase the life time of the heat pumps of the last heating stages (which work in the most hard conditions, at high temperatures of operating fluid) by means of transferring them to the light duty conditions of the heat pumps of the first stages, and therefore, to improve the life time of the whole heat-pump system in general.

The positive effect of the reversing on the operational reliability of the staged heat-pump circuit and technical and economic indicators of its operation efficiency is particularly high when using the heat pump cycle maximally close to the triangular heat pump Lorenz cycle.

The object is also achieved by the fact that in the method of heating including supplying of water into the heat-pump circuit for heating, heating this water in the circuit up to the specified temperature, and delivery of heated water to the customers, according to the present invention, said operations are performed in accordance with the above-mentioned method of hot water supply, with heated water being delivered to the consumer circuit, in which a heating device and an air heat exchanger are used for space heating. Depending on the outdoor air temperature, with the help of regulator(s) the water heated-up in the heat-pump circuit is supplied as delivery water to the heating device and/or air heat exchanger, and the return water is directed to the air heat exchanger. In the latter device supplied water is cooled by external air down to the temperature maximally close to the boiling point of the first stage heat pump operation fluid. The water cooled-down in the air heat exchanger is delivered to this heat pump for heating, and the air heated-up in the heat pump is supplied to the heated room.

Such a method for heating allows for arranging, in order of heating water in a heat-pump circuit having n consecutive heating stages, and in the heating system in general, a heat-pump cycle, maximally close to the triangular heat pump Lorenz cycle, providing thereby operation with the minimum throttling losses, with beneficial usage of practically all the heat produced by the pumps. Herewith, supply of the heated water with the help of regulator(s) to every room being heated (of the delivery water - to the heating device and/or air heat exchanger, and of the return water - to the air heat exchanger) provides for operation of such a system as a water-air or an air heating system, depending on the outdoor air temperature. It allows for using the method for heating in a wide range of the outdoor air temperatures, from +8°C to less than -40°C, i.e., in the regions of the various climatic conditions.

The selected mode of cooling the water, supplied into an air heat exchanger, when it is cooled to the temperature maximally close to the boiling point of the first heating stage heat pump operating fluid, and the air heated in the heat exchanger is directed to the room being heated, allows for effectively using this supplied water heat for the heating needs at various outdoor air temperatures, including low temperatures, and at the same time, makes it possible in the process of cooling in the air heat exchanger to assure temperature of water supplied for heating into the first stage heat pump, in the temperature range, required for obtaining the heat pump cycle, maximally close to the triangular heat pump Lorenz cycle.

Efficiency of the method is explained also by the fact that it guarantees the heating system operation at the specified heated (delivery) water temperature not above +75°C at any outdoor air temperature, even below -40°C, since thereat, the temperature of +60°C of the return water is quite enough for obtaining the warm air of +40°C temperature directed into the room being heated, which is necessary to obtain comfortable temperature of +20°C in this room). It makes possible to save electric power and protects heat pumps from overload. According to calculations, the mode with beneficial use of almost all heat produced by the pumps for the above-mentioned heating systems used in a heating circuit depending on the outdoor air temperature, ensures high technical and economical performance of the heat-pump cycle: $\varphi$ transformation ratio, considerably exceeding the same ratio not only of the traditional hot water supply systems (with one heat pump), but also of the staged hot water supply systems operating by cycle similar to the quadrangular heat pump Lorenz cycle, as well as lower specific electric power consumption $N_{e\ spec.\ aver.}$ and a payback period PBP, within economical validity range, but most importantly, a considerably lower produced heat cost $C_{heat\ aver.}$, even if compared with the traditional heat sources for the hot water supply (boiler stations and CHPs). The achievable parameters of the heat-pump cycle suggest improvement of the technical and economical efficiency of the suggested method for heating compared to the above-mentioned closest analog.

It is preferable, before directing the outdoor air to the air heat exchanger, to warm-up it in an air checker with the warm air removed from the heated space.

According to calculations, in the presence of an air checker efficiency of cooling water supplied to the air heat exchanger is increased approximately by 20% due to the fact that the air heat exchanger requires less cost of cooling of supplied to it water at the same temperature of water and air on its outputs. Besides, when using an air checker, an effective utilization of heat removed from the heated space takes place; this heat is used almost completely for warming-up outdoor air (except for losses in the air checker), i.e., unconvertible losses due to removed warm air are reduced to a minimum.

The features and advantages of the present invention will be better understood by reading the following detailed description with reference to the attached figures.

Brief Description of Drawings

Fig. 1 shows the heat pump circuit of the hot water supply system with three-staged heating;

Fig. 2 - TS-diagram (temperature-entropy chart) of the hot water supply system operating by a heat-pump cycle maximally close to the triangular heat-pump Lorenz cycle (hereinafter "the triangular Lorenz cycle") with six-stage heating, compared to the traditional single-stage heat-pump cycle;

Fig. 3 - TS-diagram of the hot water supply system operating by a heat-pump cycle similar to the quadrangular heat pump Lorenz cycle (hereinafter "the quadrangular Lorenz cycle") with six-stage heating, compared to the traditional single-stage heat-pump cycle;

Fig. 4 - scheme of the heating system with three-stage heating for heating several spaces, operating by the triangular Lorentz cycle;

Fig. 5 - TS-diagram of the heating system operating by the quadrangular Lorenz cycle, depending on the last stage heat pump condensation temperature, for the six-stage heating;

Fig. 6 - TS-diagram of the heating system operating by the triangular Lorentz cycle with six-stage heating, compared to TS-diagram of the similar system, operating by the quadrangular Lorentz cycle, and also compared to the traditional single-stage heat-pump cycle.

Description of Embodiments

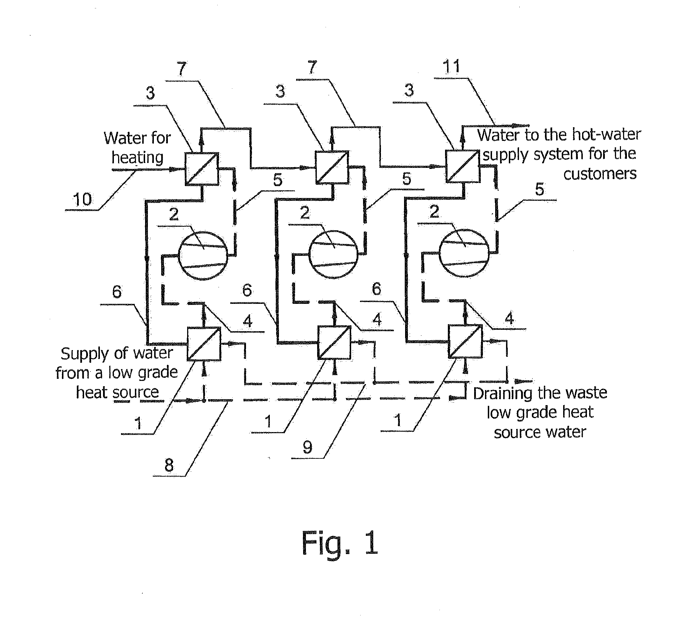

The hot water supply system comprises a heat-pump circuit consisting of several heat pumps. Fig. 1 shows three heat pumps, each of which includes an evaporator 1, compressor 2 and a condenser 3, interconnected by the conduits 4 - 6. Condensers 3 of the heat pumps are connected in series by conduits 7. Supply of water from a low grade heat source is accomplished by the conduit 8, conduit 9 is designed for draining the waste low grade heat source water, conduit 10 serves for supplying water for heating into the heat-pump circuit of the hot water supply system, and conduit 11 is employed for delivery of the heated water to the customers. The evaporator 1, compressor 2, and condenser 3, connected by the conduits 4 - 6, form a closed-loop work circuit for circulating operating fluid of each heat pump. Evaporators 1 of all heat pumps, conduits 8, 9, and low grade heat source form a low grade heat circuit. On Fig. 1 this circuit is shown as general, open, and parallel. It can be closed, serial and individual. Condensers 3 of all heat pumps, connected in series by conduits 7, form with conduits 10, 11 a water circuit of the heat-pump circuitry of the hot water supply system.

The method for hot water supply is realized with the said system in the following way.

Each heat pump of the heat-pump circuit is used as a consecutive stage of water heating. Water for heating is supplied by the conduit 10 to the condenser 3 of the first stage heat pump, and low grade heat source water is supplied to evaporators 1 of the heat pumps of every stage by the low grade heat circuit. As a result, operating fluid in evaporators 1 starts boiling, and transforms from liquid to gaseous state. The formed steam by the conduits 4 enters the compressors 2, where upon the compression is heated to a high temperature, and under pressure is expelled to condensers 3 by conduits 5. In the condenser 3 of the first stage heat pump the operating fluid transfers heat to water supplied for heating by the conduit 10, transforms from steam to liquid, and returns to evaporator 1 by conduit 6. The water being heated is passed by the water circuit sequentially from one stage to another, i.e., water from the first stage condenser 3 by conduit 7 enters condenser 3 of the second stage, heated in the second stage to higher temperature water by conduit 7 enters condenser 3 of the third stage, and water, heated to the specified temperature in the third stage, is delivered by conduit 11 to the hot water supply system for the customers.

To enable the mode of beneficial usage of practically all heat produced by the pumps in the heat-pump circuit of the hot water supply system, the triangular Lorenz cycle is organized for water heating. To furnish it, the temperature of water supplied for heating into the first stage heat pump is selected (i.e., the initial temperature of water supplied for heating), and each heat pump is adjusted. Initial temperature of the supplied water is chosen as close as possible to the boiling point of the operating fluid of the first stage heat pump, and constant. If the boiling point of the operating fluid of this heat pump is 0°C, it is preferable to choose the initial temperature of the water supplied for heating equal or close to 0°C. Herewith, the heat pump of each stage is adjusted to the condensation temperature of its operating fluid, at which the heat $Q_i$ given off by the stage, satisfies the condition:

$$Q_i \approx \frac{1}{n} \times Q_{output},$$

where:

i - sequence number of a heating stage;
$O_{utput}$ - total heat obtained from all the heating stages at the output of the last stage;
n - total number of the heating stages.

To meet the condition, the condensation temperature of operating fluid of each stage heat pump should be maximally close to the temperature of the heated water at the output of this stage. Since the heated water temperature rises from stage to stage, the operation fluid condensation temperatures from stage to stage will change in accordance with the change of the heated water temperature in the condensers 3.

As a result of said set-up and choice of initial temperature of water supplied for heating at approximately the same output of the heating stages, the same temperature increase of water heated at the stages is achieved, which provides accomplishment of the assigned task.

From four to six heating stages are used in a heat-pump circuit, which is optimal for obtaining the highest values of all parameters of the heat pump cycle. The initial temperature of water supplied for heating may be selected in a range from 0°C to +15°C, since that is the temperature maximally close to the boiling point of the first stage heat pump operating fluid, which is a necessary condition for the mode with beneficial usage of practically all heat produced by the pumps.

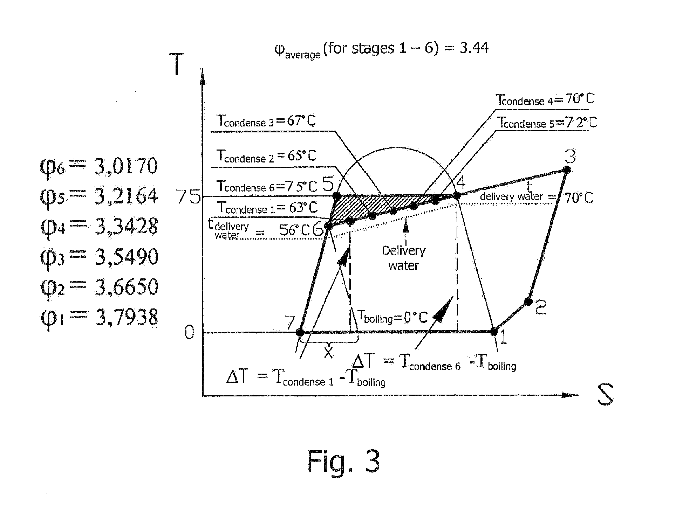

Provided that the specified modes are observed, in the heat pump circuit and in the hot water supply system in general the triangular heat pump Lorenz cycle 1-2-3-4-6-7-1 will be organized, shown on Fig. 2, due to which, compared to the traditional single-stage heat pump cycle 1-2-3-4-5-6-7-1, the economic benefit is obtained shown with a shaded area on Fig. 2. On Fig. 2 symbol T denotes the temperature, symbol S denotes entropy of the system, and the numbers 1 - 6 indicate the heating stages. In the system accomplished in accordance with the above-mentioned source of G.Heinrich et al., operating by the quadrangular Lorentz cycle 1-2-3-4-6-7-1 (Fig. 3), according to calculations, compared to the same traditional single-stage heat pump cycle 1-2-3-4-5-6-7-1, considerably lower economic benefit is achieved (shown with a shaded area).

Table 1 shows the calculated engineering and economical performance of the triangular Lorenz cycle with six-stage heating for the methods of hot water supply and heating in comparison with the traditional single-stage heat pump cycle.

Table 1

| | Heat pump cycle type | | Operating fluid boiling point, °C | Operating fluid condensation temperature, °C | Temperature of heated water for hot water supply system, °C | Unitary heating capacity, Gcal/h | Specific electric power consumption for heat pump driving, kWh/Gcal | Prime cost of heat-pump produced heat, Rbl/Gcal | Transformation ratio, $\varphi$ | Increase of capital cost and payback period, years |
|---|---|---|---|---|---|---|---|---|---|---|
| | 1 | 2 | 3 | 4 | 5 | 6 | 7 | 8 | 9 | 10 |
| 1 | Traditional single-stage vapor compression heat pump cycle. Screw compressor | TONT-3000, 1 item | 0 | 75.0 | 70.0 | 2.0143 | 295.30 | 655.3 | 3.9386 | 5.8 |
| 2 | Six-stage vapor compression heat pump cycle (approximation to triangular Lorentz cycle) Piston compressors | TONT-3000 №1 | 0 | 17.0 | 12.0 | 0.3492 | 94.95 | 226.5 | 12.2480 | $PBP = 3.23$ years $K/K_{trad.} = 1.89$ |
| 3 | | TONT-3000 №2 | 0 | 29.0 | 24.0 | 0.3520 | 140.43 | 323.8 | 8.2817 | |
| | | TONT-3000 №3 | 0 | 41.0 | 36.0 | 0.3458 | 174.48 | 396.7 | 6.6656 | |
| | | TONT-3000 №4 | 0 | 53.0 | 48.0 | 0.3343 | 205.04 | 462.1 | 5.6721 | |
| | | TONT-3000 №5 | 0 | 64.0 | 59.0 | 0.3265 | 242.70 | 542.8 | 4.7916 | |
| | | TONT-3000 №6 | 0 | 75.0 | 70.0 | 0.3160 | 281.50 | 625.7 | 4.1320 | |
| 4 | Total and average parameters of the six-stage heat pump cycle | | | | | | | | | |

$\Sigma Q_{heat\ capacity} = 2.0238$ Gcal/h; $N_{e\ spec.\ aver.} = 165.03$ kWh/Gcal;

$\varphi_{aver.} = 7.047$; $C_{heat} = 376.5$ Rbl/Gcal;

$C_{trad.\ cycle} = 779.15$ Rbl/Gcal; Data on March 01st, 2009

Initial and calculated parameters

As can be seen from the Table 1, calculated technical and economic performance of the triangular Lorenz cycle in a hot water supply system implementing the suggested method, significantly exceed performance of the traditional hot water supply system with one heat pump: at the same temperature of the heated water at the output and at five equal heating capacities specific electric power consumption ($N_{e\ spec.\ aver.}$), prime cost of heat-pump produced heat ($C_{heat\ aver.}$), and payback period (PBP) decrease, and finally, transformation ratio $\varphi$ of the heating stages and of the hot water supply system in general increase (for the six-stage heating system an average transformation ratio $\varphi_{aver.}$ is 7.047, total heating capacity $\sum Q_{heat\ capacity}$ = 2.0238 Gcal/h, electric energy saving makes 2.51 times, and, though the capital cost K increase 1.89 times, payback period PBP does not exceed 3.23 years).

Table 2 shows the calculated engineering and economical performance of the quadrangular Lorenz cycle with six-stage heating for the methods of hot water supply and heating in comparison with the traditional single-stage heat pump cycle.

Table 2

| | Heat pump cycle type | | Initial and calculated parameters | | | | | | | |
|---|---|---|---|---|---|---|---|---|---|---|
| | | | Operating fluid boiling temperature, °C | Operating fluid condensation temperature, °C | Temperature of heated water for hot water supply system, °C | Unitary heating capacity, Gcal/h | Specific electric power consumption for heat pump driving, kWh/Gcal | Prime cost of heat-pump produced heat, Rbl/Gcal | Transformation ratio, $\varphi$ | Increase of capital cost and payback period, years |
| 1 | 1 | 2 | 3 | 4 | 5 | 6 | 7 | 8 | 9 | 10 |
| 2 | Traditional single-stage vapor compression heat pump cycle. Screw compressor | TONT-3000 1 item | 0 | 75.0 | 70.0 | 1.5299 | 402.1 | 884.0 | 2.8925 | – |
| 3 | Six-stage vapor compression heat pump cycle (approximation to triangular Lorentz cycle) Piston compressors | TONT-3000№1 | 0 | 63.0 | 58.0 | 0.2554 | 306.6 | 679.5 | 3.7938 | $K/K_{trad.} = 1.89$ $PBP = 33.3$ years |
| | | TONT-3000 №2 | 0 | 65.0 | 60.0 | 0.2536 | 317.3 | 702.4 | 3.6650 | |
| | | TONT-3000 №3 | 0 | 67.0 | 62.0 | 0.2512 | 327.7 | 724.6 | 3.5490 | |
| | | TONT-3000 №4 | 0 | 70.0 | 65.0 | 0.2445 | 347.9 | 767.9 | 3.3428 | |
| | | TONT-3000 №5 | 0 | 72.0 | 67.0 | 0.2398 | 361.6 | 797.2 | 3.2164 | |
| | | TONT-3000 №6 | 0 | 75.0 | 70.0 | 0.2307 | 385.5 | 848.3 | 3.0170 | |
| 4 | Total and average parameters of the six-stage heat pump cycle | | $\Sigma Q_{heat\ capacity} = 1.4752$ Gcal/h; $N_{e\ spec.\ aver.} = 338.1$ kWh/Gcal; $\varphi_{aver.} = 3.44$; $C_{heat\ aver.} = 746.9$ Rbl/Gcal; $C_{trad.\ cycle} = 779.15$ Rbl/Gcal; Data on March 01st, 2009 | | | | | | | |

EP 2 631 546 A1

As can be seen from Table 2, the hot water supply system operating by the quadrangular Lorentz cycle (prior art), for six-stage heating the average transformation ratio $\varphi_{aver.}$ is 3.44, the total heating capacity $\Sigma Q_{heat\ capacity}$ = 1.4752 Gcal/h, power saving is up to 22.4%, capital costs K also increase 1.89 times, with PBP = 33.3 years. Thus, the comparison of technical and economic performances counts in favor of the method for supplying hot water in accordance with the present invention

The suggested method for supplying hot water provides for switching the heat-pump circuit to reverse during heating with the flow-diversion controllers located on inlets of the heat pumps of the first and the last stages (not shown on Fig. 1). In addition, the heat pumps of the last stages, running at high operating fluid temperatures and pressures, are transferred to the derated operation mode of the heat pumps of the first stages, which increases their service life, and consequently, the service life of the system as a whole.

The heating system, implementing the suggested method for supplying hot water, comprises a closed-loop circuit including a heat-pump circuit, the inlet and outlet of which are connected, correspondingly, to the outlet and inlet of the consumer circuit, and provides for heat supply for heating the residential accommodations and shop facilities.

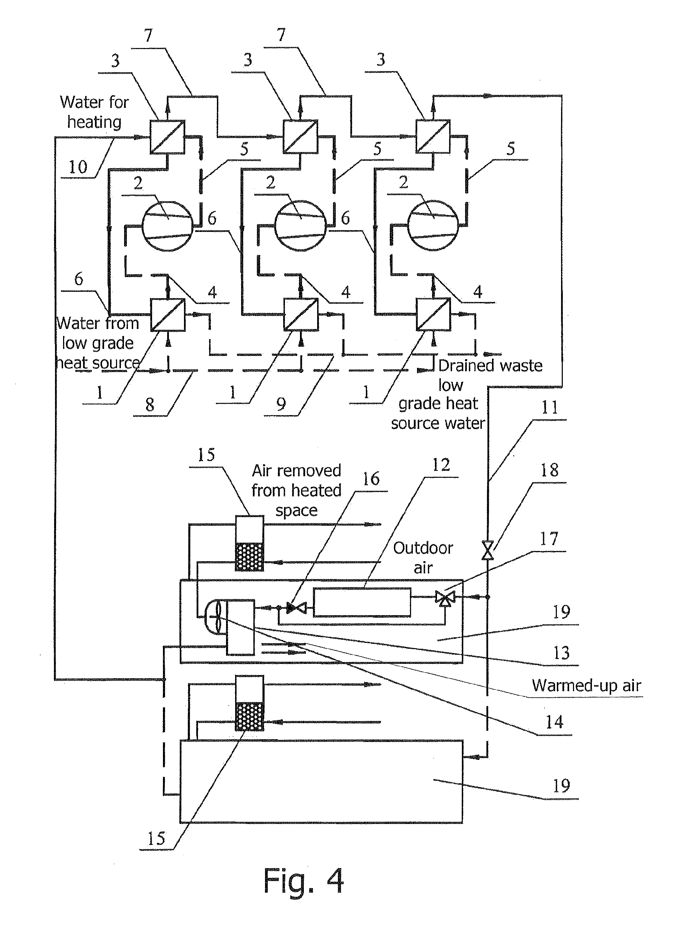

The heat pump circuit (Fig. 4), as well as the hot water supply system, includes several heat pumps connected in a staged pattern. Fig. 4 shows three heat pumps, each of which includes an evaporator 1, compressor 2 and a condenser 3, interconnected by the conduits 4 - 6. Condensers 3 of the heat pumps are connected in series by conduits 7. Supply of water from a low grade heat source is accomplished by the conduit 8, conduit 9 is designed for draining the waste low grade heat source water, conduit 10 serves for supplying water for heating into the heat-pump circuit of the heating system, and conduit 11 is employed for delivery of the heated water to the consumer circuit. The evaporator 1, compressor 2, and condenser 3, connected by the conduits 4 - 6, as it is shown on Fig. 4, form a closed-loop work circuit for circulating operating fluid of each heat pump. Evaporators 1 of all heat pumps, conduits 8, 9, and low grade heat source form a low grade heat circuit. On Fig. 1, just as on Fig. 1, this circuit is shown as general, open, and parallel. However, it can be closed, serial and individual. Condensers 3 of all heat pumps, connected in series by conduits 7, form with conduits 10, 11 a water circuit of the heat-pump circuit.

In the consumer circuit for heating every space the following elements are used: a heating unit 12 (for example, a radiator), an air heat exchanger 13 (for example, an air heater with a fan 14), an air checker 15 (for instance, of a rotating mass type), and a non-return valve 16. Connecting of heating devices 12 and air heat exchangers 13 into the consumer circuit is accomplished, depending on the outdoor air temperature, either locally with regulators 17 (for instance, three-way valves) on their inlets (preferable for residential accommodations), as is shown on Fig. 4, or in a centralized way, with the help of one regulator 17 (a three-way valve, too, not shown on Fig. 4) at the inlet of the consumer circuit (preferable in case of heating several shop facilities). The conduits (not denoted with the positions) connect the outlet of each heating unit 12, through the non-return valve 16, with the inlet of air heat exchanger, the outlet of air heat exchanger with the inlet of the heat pump circuit (that is, with the inlet of the first stage heat pump), and the fan 14 - with the inlet of the air checker 15. Conduit 11 from the heat-pump circuit outlet (from the last stage heat pump outlet) is connected to the consumer circuit through the regulator 18. The heated spaces are denoted with the position 19. The consumer circuit may have at least one heated room 19.

The heating method is realized with the use of the heating system and the above-mentioned method for supplying hot water in the following way.

Each heat pump of the heat-pump circuit of the heating system, as well as in the method for supplying hot water, is used as a consecutive water heating stage. After preparation of the system for operation water to be heated is supplied by conduit 10 into the heat-pump circuit, to the condenser 3 of the first stage heat pump, and water from a low grade heat source is supplied to evaporators 1 of each stage heat pumps by the low grade heat circuit. As a result, operating fluid in evaporators 1 starts boiling, and transforms from liquid to gaseous state. The formed steam by the conduits 4 enters the compressors 2, where upon the compression is heated to a high temperature, and under pressure is expelled to condensers 3 by conduits 5. In the condenser 3 of the first stage heat pump the operating fluid transfers heat to water supplied for heating by the conduit 10, transforms from steam to liquid, and returns to evaporator 1 by conduit 6. The water being heated is passed by the water circuit sequentially from one stage to another, i.e., water from the first stage condenser 3 by conduit 7 enters condenser 3 of the second stage, heated in the second stage to higher temperature water by conduit 7 enters condenser 3 of the third stage, and water, heated to the specified temperature in the third stage, is delivered by conduit 11 through regulator 18 into the consumer circuit.

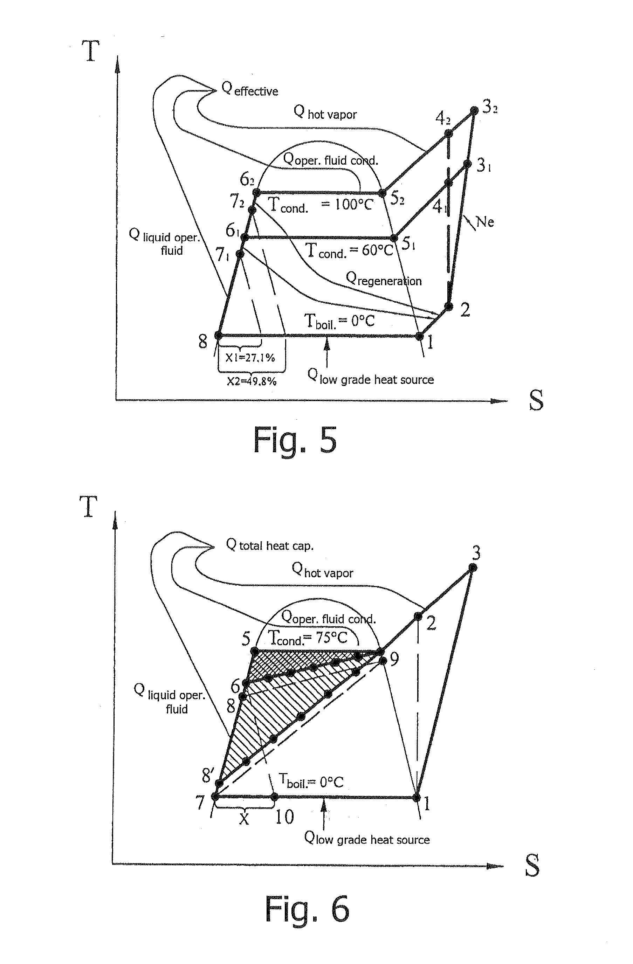

If the system according to the above-mentioned book of G.Heinrich et al., with the similar heat-pump circuit and working by the quadrangular Lorentz cycle, is used for heating with delivery of the return water (for example, of temperature +60°C) into the first stage heat pump, than the heat-pump circuit will have high losses due to partial self-boiling of the heat pumps operating fluid, so-called "throttling losses", which rise as the operating fluid condensation temperature increases, from one heating stage to another (on Fig. 5 throttling losses are denoted by X1 and X2).

To obtain the operation mode free of throttling losses, i.e., with beneficial usage of practically all heat produced by the pumps, in the heat-pump circuit of the heating system the triangular Lorenz cycle is organized for water heating. For this purpose, for heating into the heat-pump circuit (into the first stage heat pump) the water is supplied with the temperature necessary for such cycle (initial temperature), and each heat pump is adjusted. Initial temperature of the supplied water is chosen as close as possible to the boiling point of the operating fluid of the first stage heat pump, and constant. If boiling point of operating fluid of this heat pump is 0°C, the best variant is to choose the initial temperature of water supplied for heating as equal or close to 0°C. Herewith, the heat pump of each stage is adjusted to the condensation temperature of its operating fluid, at which the heat Qi given off by the stage, satisfies the condition:

$$Q_i \approx \frac{1}{n} \times Q_{output},$$

where:

i - sequence number of a heating stage;
$Q_{output}$ - total heat obtained from all the heating stages at the output of the last stage;
n - total number of the heating stages.

To meet the condition, the condensation temperature of operating fluid of each stage heat pump should be maximally close to the temperature of the heated water at the output of this stage. Since the heated water temperature rises from stage to stage, the operation fluid condensation temperatures from stage to stage will change in accordance with the change of the heated water temperature in the condensers 3.

As a result of said set-up and choice of initial temperature of water supplied for heating at approximately the same output of the heating stages, the same temperature increase of water heated at the stages is achieved, which provides the heat-pump circuit running with beneficial usage of practically all the heat produced by the pumps.

From four to six heating stages are used in a heat-pump circuit of the heating system, which is optimal for obtaining the highest values of all parameters of the heat pump cycle. It is preferable to select the initial temperature of water supplied for heating in a range from 0°C to +15°C, since that is the temperature maximally close to the boiling point of the first stage heat pump operating fluid, which is a necessary condition for the mode with beneficial usage of practically all heat produced by the pumps.

Provided that the specified requirements are observed, in the heat pump circuit and in the hot water supply system as a whole the triangular Lorenz cycle 7-1-3-4-8'-7 will be organized, (see Fig. 6), due to which, compared to the traditional single-stage heat pump cycle 7-1-3-4-5-8'-7, the economic benefit is obtained shown with a shaded area 8'-4-5-8'. In the system accomplished in accordance with the above-mentioned source of G.Heinrich et al., operating by the quadrangular Lorentz cycle 7-1-3-4-6-8'-7 (Fig. 6), according to calculations, compared to the same traditional single-stage heat pump cycle 7-1-3-4-5-8'-7, considerably lower economic benefit can be achieved (shown with a shaded area 6-4-5). The calculated technical and economical performance of the triangular and quadrangular Lorenz cycles in the heating method using the above-mentioned method for supplying hot water are given in the Tables 1 and 2, correspondingly. Tables 1 and 2 demonstrate an obvious advantage of the triangular Lorenz cycle compared to the quadrangular Lorenz cycle.

To obtain in the consumer circuit the initial temperature of the supplied water, necessary for the triangular Lorenz cycle, with the help of a temperature selector (not shown on Fig. 4) the required temperature is set up, to which the air in the heated space 19 should be heated. The temperature selector is controlled by the regulator 17, distributing the flow of water heated-up in the heat-pump circuit (playing the role of delivery water in the process of heating) between the heating device 12 and the air heat exchanger 13, by means of which the heated air is directed into the heated space 19. Depending on the difference between the temperature set-up on the selector and the actual temperature in the heated space 19 (which depends on the outdoor air temperature) the fan 14 rotation rate is controlled, thereby changing the volume of heated air supplied into the heated space 19. As a result, depending on the outdoor air temperature, operation of the system by the water-air or air pattern is provided.

In the beginning of a heating season, when outdoor air temperature does not fall lower than -7°C, delivery water is supplied into the heating device 12, and return water is directed to air heat exchanger 13 through the non-return valve 16. Since the return water temperature therewith is not high, actually, just one heating device 12 is working for the heating. When the outdoor air temperature drops low, the return water temperature increases, which allows for involving into operation the fan 14 of the air heat exchanger 13, which supplies warm air of +40°C temperature into the heated space 19. At further lowering of the outdoor air temperature the return water temperature becomes insufficient for heating air up to +40°C in the air heat exchanger 13. Then the return water is heated by the delivery water by means of directing these waters simultaneously into the heating unit 12 and the air heat exchanger 13 with the help of the regulator(s) 17. Therewith, the non-return valve 16 at the outlet of the heating unit 12 prevents direct delivery water from entering the outlet. At the outdoor air temperature lower than -40°C joint operation of the heating unit 12 and the air heat exchanger 13 no longer provides a comfortable temperature +20°C in the heated space 19. In this case the heating unit 12 is switched-off by the regulator 17, and delivery water is supplied directly to the air heat exchanger 13. Fan 14 increases the volume of the supplied hot air.

Thus, in the heating system, depending on the outdoor air temperature, the delivery water is supplied to the heating unit 12 and/or to the air heat exchanger 13.

In the air heat exchanger 13 the supplied water (return water and/or delivery water) is cooled by the outdoor air entering through the air checker 15 down to the initial temperature (for the heat pumps) selected for guaranteeing operation of the heat pumps by the triangular Lorentz cycle. After that the cooled water is directed for heating into the first stage heat pump by the counduit 10, and the air heated to temperature +40°C in the air heat exchanger 13 is delivered into the heated space 19. In the process, the air from the heated space 19 is directed to the air checker 15 for heating with this air the outdoor air entering the checker 15, and the air cooled down in the air checker 15 is sent to discharge.

The suggested method of heating provides for switching to reverse the heat-pump circuit of the heating system during heating with the help of flow-diversion controllers located at the inlets of the heat pumps of the first and the last stages (not shown on Fig. 4). In addition, the heat pumps of the last stages, running at high operating fluid temperatures and pressures, are transferred to the derated operation mode of the heat pumps of the first stages, which increases their service life, and consequently, the service life of the heating system as a whole.

In the summer season, the consumer circuit of the heating system is switched off with regulator 18, and the heat-pump circuit is used for the hot water supply needs by means of supplying to its inlet water with a temperature necessary for obtaining the triangular Lorenz cycle.

Thus, the heating method according to the invention provides operation of a heating system by the triangular Lorentz cycle with the beneficial usage of almost all the heat produced by the pumps, in the regions with different climatic conditions, which allows to solve the assigned task.

Embodiments of the method for supplying hot water.

<u>Example 1.</u> The hot water supply system in the form of a heat-pump circuit comprises three heat pumps, that is, three heating stages; moreover, the heated water is passed sequentially from one stage to another.

The operating fluid boiling point of every heat pump is 0°C; temperature of water supplied for heating to the first stage heat pump is approximately 0°C; the operating fluid condensation temperature of the first stage heat pump is +35°C; the temperature of the heated water at the first stage outlet is +30°C; the operating fluid condensation temperature of the second stage heat pump is +55°C; the temperature of the heated water at the second stage outlet is +50.3°C; the operating fluid condensation temperature of the third stage heat pump is +75°C; the temperature of the heated water for the hot water supply is +71°C, and this water is delivered to the consumers.

<u>Example 2.</u> The hot water supply system comprises six heat pumps, that is, six heating stages; moreover, the heated water is passed sequentially from one stage to another.

The operating fluid boiling point of each heat pump is 0°C; temperature of water supplied for heating to the first stage heat pump is approximately 0°C; the operating fluid condensation temperature of the first stage heat pump is +17°C; the temperature of the heated water at the first stage outlet is +12°C; the operating fluid condensation temperature of the second stage heat pump is +29°C; the temperature of the heated water at the second stage outlet is +24°C; the operating fluid condensation temperature of the third stage heat pump is +41 °C; the temperature of the heated water at the third stage outlet is +36°C; the operating fluid condensation temperature of the fourth stage heat pump is +53°C; the temperature of the heated water at the fourth stage outlet is +48°C; the operating fluid condensation temperature of the fifth stage heat pump is +64°C; the temperature of the heated water at the fifth stage outlet is +59°C; the operating fluid condensation temperature of the sixth stage heat pump is +75°C; the temperature of the heated water for the hot water supply is +70°C, and this water is delivered to the consumers.

Embodiment examples of the heating method, utilizing the above-mentioned method for supplying hot water in the heating system including the heat-pump circuit connected with the consumer circuit, are presented in Tables 3 and 4.

Table 3 presents the calculated technical and economical performance of the triangular Lorenz cycle for the three-stage and six-stage heating compared to the traditional single-stage heat pump cycle for different operating fluid condensation temperatures of the last stage heat pump; and the Table 4 contains the calculated technical and economical performance of the quadrangular Lorenz cycle for the three-stage and the six-stage heating compared to the traditional single-stage heat-pump cycle at the different operating fluid condensation temperatures of the last stage heat pump.

These tables show the following parameters, correspondingly, for the triangular and the quadrangular Lorenz cycles, at the three-stage and six-stage heating systems, for different operation fluid condensation temperatures of the last stage heat pump: transformation ratio $\varphi$, prime cost of the heat produced $C_{heat}$, payback period PBP, and the total heating capacity $Q_{total\ heat\ cap.}$. The modes, operation on which is economically impractical, are framed.

Table 3

| | Calculated technical and economical parameters including VAT for the triangular Lorentz cycle | | | Operating fluid boiling temperature, $t_{boil.} = 0°C$ | | | | | | |
|---|---|---|---|---|---|---|---|---|---|---|
| 1 | | | | $t_{cond.}$ 60°C | $t_{cond.}$ 65°C | $t_{cond.}$ 70°C | $t_{cond.}$ 75°C | $t_{cond.}$ 80°C | $t_{cond.}$ 85°C | $t_{cond.}$ 90°C |
| | 1 | | | 2 | 3 | 4 | 5 | 6 | 7 | 8 |
| 2 | Capital costs for a single heat pump NT-1000. $Q_{heat\ cap.}$ = 0.8 -1.0 Gcal/h. K = 6.3 mln. Rbl/Gcal. Electric power cost $C_{el.}$ = 2.14 Rbl/kWh. Traditionally produced heat cost Ctrad. cycle = 779.15 Rbl/Gcal. Data on March 01st, 2009. | Traditional single heat pump NT-1000. $Q_{heat\ cap.}$ = 0.8 -1.0 Gcal/h. Operating fluid – freon R12. Cold water temperature +5°C, screw compressor | $\varphi$ | 4.908 | 4.558 | 4.257 | 3.996 | 3.761 | 3.543 | 3.342 |
| | | | $C_{heat}$, Rbl/Gcal | 530.4 | 569.4 | 607.8 | 646.2 | 685.2 | 72531 | 768.0 |
| | | | PBP | 4.65 | 5.51 | 6.75 | 8.70 | 123 | 21.701 | 103.60 |
| | | | $Q_{total\ heat\ cap.}$, Gcal/h | 0.928 | 0.918 | 0.907 | 0.890 | 0.867 | 0.840 | 0.809 |
| | | | $Q_{heat\ cap.,water\ heating}$, Gcal/h | 0.248 | 0.275 | 0.330 | 0.371 | 0.400 | 0.420 | 0.432 |
| | | | $Q_{heat\ cap.,air\ heating}$, Gcal/h | 0.680 | 0.643 | 0.577 | 0.519 | A467 | 0.420 | 0377 |
| 3 | Capital costs for three heat pumps NT-300. $Q_{heat\ cap.}$ ≈ 0.9 -1.0 Gcal/h. K = 8.82 mln. Rbl/Gcal. Electric power cost $C_{el.}$ = 2.14 Rbl/kWh. Traditionally produced heat cost $C_{trad.\ cycle}$ = 779.15 Rbl/Gcal. Data on March 01st, 2009. | Three NT-300 heat pumps. Total heating capacity $Q_{total\ heat.\ cap.}$ = 1.0-0.95 Gcal/h. Operating fluid – freon R12. Cold water temperature +5°C. Piston compressors. | $\varphi$ | 6.282 | 6.043 | 5.776 | 5.503 | 5.316 | 5.109 | 4.897 |
| | | | $C_{heat}$, Rbl/Gcal | 419.5 | 435.2 | 454.2 | 475.6 | 491.5 | 510.5 | 531.6 |
| | | | PBP | 4.50 | 4.71 | 4.98 | 5.33 | 5.63 | 6.03 | 6.54 |
| | | | $Q_{total\ heat\ cap.}$, Gcal/h | 0.988 | 0.982 | 0.975 | 0.964 | 0.953 | 0.942 | 0.927 |
| | | | $Q_{heat\ cap.,water\ heating}$, Gcal/h | 0.264 | 0.295 | 0.355 | 0.402 | 0.440 | 0.471 | 0.494 |
| | | | $Q_{heat\ cap.,air\ heating}$, Gcal/h | 0.721 | 0.687 | 0.620 | 0.562 | 0.513 | 0.471 | 0.433 |
| 4 | Capital costs for six heat pumps NT-110. $Q_{heat\ cap.}$ = 1.0-0.95 Gcal/h. K = 11.34 mln. Rbl/Gcal. Electric power cost $C_{el.}$ = 2.14 Rbl/kWh. Traditionally produced heat cost $C_{trad.\ cycle}$ = 779.15 Rbl/Gcal. Data on March 01st, 2009. | Six NT-110 heat pumps. Total heating capacity $Q_{total\ heat.\ cap.}$ = 1.0-0.95 Gcal/h. Operating fluid – freon R12. Cold water temperature +5°C. Piston compressors. | $\varphi$ | 6.829 | 6.587 | 6.298 | 6.021 | 5.868 | 5.691 | 5.467 |
| | | | $C_{heat}$, Rbl/Gcal | 387.8 | 401.2 | 418.5 | 436.7 | 447.4 | 460.7 | 478.6 |
| | | | PBP | 5.32 | 5.51 | 5.77 | 6.08 | 6.28 | 6.54 | 6.93 |
| | | | $Q_{total\ heat\ cap.}$, Gcal/h | 0.995 | 0.989 | 0.984 | 0.976 | 0.968 | 0.959 | 0.948 |
| | | | $Q_{heat\ cap.,\ water\ heating}$, Gcal/h | 0.266 | 0.297 | 0.358 | 0.407 | 0.447 | 0.480 | 0.506 |
| | | | $Q_{heat\ cap.,\ air\ heating}$, Gcal/h | 0.729 | 0.692 | 0.626 | 0.569 | 0.521 | 0.479 | 0.442 |

Table 4

| Calculated technical and economical parameters including VAT for the triangular Lorentz cycle | | | Operating fluid boiling temperature, $t_{boil.} = 0°C$ | | | | | | |
|---|---|---|---|---|---|---|---|---|---|
| | | | $t_{cond.}$ 60°C | $t_{cond.}$ 65°C | $t_{cond.}$ 70°C | $t_{cond.}$ 75°C | $t_{cond.}$ 80°C | $t_{cond.}$ 85°C | $t_{cond.}$ 90°C |
| 1 | | | 2 | 3 | 4 | 5 | 6 | 7 | 8 |
| Capital costs for a single heat pump NT-1000. $Q_{heat\,cap.} = 0.8$ -1.0 Gcal/h. K = 6.3 mln. Rbl/Gcal. Electric power cost $C_{el.} = 2.14$ Rbl/kWh. Traditionally produced heat cost $C_{trad.\,cycle} = 779.15$ Rbl/Gcal. Data on March 01$^{st}$, 2009. | Traditional single heat pump NT-1000. $Q_{heat\,cap.} = 0.8$ -1.1 Gcal/h. Operating fluid – freon R12. Cold water temperature +5°C, screw compressor | $\phi$ | 3.716 | 3.439 | 3.175 | 2.892 | 2.683 | 2.502 | 2.128 |
| | | $C_{heat}$, Rbl/Gcal | 683.1 | 737.1 | 807.3 | 874.0 | 941.0 | 1008.2 | 1120.4 |
| | | PBP | 12.00 | 27.50 | — | — | — | — | — |
| | | $Q_{total\,heat\,cap.}$, Gcal/h | 0.877 | 0.867 | 0.848 | 0.815 | 0.793 | 0.771 | 0.764 |
| Capital costs for three heat pumps NT-300. $Q_{heat\,cap.} = 0.95$ -1.0 Gcal/h. K = 11.34 mln. Rbl/Gcal. Electric power cost $C_{el.} = 2.14$ Rbl/kWh. Traditionally produced heat cost $C_{trad.\,cycle} = 779.15$ Rbl/Gcal. Data on March 01st, 2009. | Three NT-300 heat pumps. Total heating capacity $Q_{total\,heat.\,cap.} = 0.95$-1.0 Gcal/h. Operating fluid – freon R12. Cold water temperature +5°C. Piston compressors. | $\phi$ | 4.398 | 4.029 | 3.682 | 3.326 | 3.054 | 2.815 | 2.659 |
| | | Cheat, Rbl/Gcal | 589.2 | 641.1 | 699.3 | 771.7 | 838.3 | 907.5 | 959.4 |
| | | PBP | 5.66 | 7.78 | 13.46 | 144.30 | — | — | — |
| | | $Q_{total\,heat\,cap.}$, Gcal/h | 0.807 | 0.782 | 0.758 | 0.726 | 0.695 | 0.662 | 0.638 |
| Capital costs for six heat pumps NT-110. Qheat cap. = 1.0-0.95 Gcal/h. K = 11.34 mln. Rbl/Gcal. Electric power cost $C_{el.} = 2.14$ Rbl/kWh. Traditionally produced heat cost $C_{trad.\,cycle} = 779.15$ Rbl/Gcal. Data on March 01st, 2009. | Six NT-110 heat pumps. Total heating capacity $Q_{total\,heat.\,cap.} = 1.0$-0.95 Gcal/h. Operating fluid – freon R12. Cold water temperature +5°C. Piston compressors. | $\phi$ | 4.494 | 4.165 | 3.799 | 3.440 | 3.149 | 2.939 | 2.747 |
| | | $C_{heat}$, Rbl/Gcal | 577.2 | 620.9 | 678.5 | 746.9 | 813.7 | 870.2 | 929.3 |
| | | PBP | 5.32 | 6.79 | 10.68 | 33.30 | — | — | — |
| | | $Q_{total\,heat\,cap.}$, Gcal/h | 0.814 | 0.790 | 0.766 | 0.736 | 0.706 | 0.706 | 0.706 |

Comparison of the calculated data of the Tables 3 and 4 demonstrates, that at the same operating fluid condensation temperature of the last stage heat pump, all the parameters of the heat pump cycle are improved for the triangular Lorenz cycle compared to the quadrangular Lorenz cycle. For example, at the condensation temperature +70°C, with the six-stage heating cycle, transformation ratio $\varphi$ is 6.298 against 3.799; prime cost of the produced heat $C_{heat}$ is 418.5 Rbl/Gcal compared to 678.5 Rbl/Gcal; payback period PBP is 5.77 against 10.68 years, and total heating capacity $Q_{total\ heat\ cap.}$ is 0.984 compared to 0.766 Gcal/h.

At the condensation temperature +75°C and above, the heating method by the quadrangular Lorentz cycle (Table 4) becomes economically impractical. With the triangular Lorenz cycle, such economical impartibility does not occur even at condensation temperature of +90°C (Table 3).

Therefore, comparison of the calculated engineering and economical performances counts in favor of heating by the triangular Lorenz cycle, realized in the chosen heating system and utilizing the method of supplying hot water according to the present invention.

**Claims**

1. A method for supplying hot water, comprising supply of water for heating to the heat-pump circuit of the system, heating this water in the circuit up to the specified temperature with the help of heat pumps, each of which is used as a consecutive water heating stage, and delivery of the heated water to the customers, **characterized in that** for heating water in the heat-pump circuit a heat pump cycle is arranged, maximally close to the triangular Lorenz heat pump cycle, for which purpose temperature of water supplied for heating into the first stage heat pump, is chosen maximally close to its operating fluid boiling temperature, and heat pump of each stage is adjusted to the condensation temperature of its operating fluid, at which the heat $Q_i$ given off by the stage, satisfies the condition:

$$Q_i \approx \frac{1}{n} \times Q_{output},$$

where:

    i - sequence number of a heating stage;
    Qoutput - total heat obtained from all the heating stages at the output of the last stage;
    n - total number of the heating stages.

2. The method for supplying hot water according to claim 1, **characterized in that** the number of the heating stages is chosen from four to six.

3. The method for supplying hot water according to claim 1 or 2, **characterized in that** temperature of the water supplied for heating to the first stage heat pump is chosen in a range from 0°C to +15°C.

4. The method for supplying hot water according to claim 1, **characterized in that** during heating of water the heat-pump circuit is switched to reverse with the help of flow-diversion controllers located at the inlets of the heat pumps of the first and the last stages of heating.

5. A method for supplying hot water, comprising supply of water for heating to the heat-pump circuit of the system, heating this water in the circuit up to the specified temperature, and delivery of the heated water to the customers, **characterized in that** the said operations are performed in accordance with the method for supplying hot water according to claims 1-4; furthermore, the heated water is delivered to the consumer circuit a heating unit and an air heat exchanger are used; besides, depending on outdoor air temperature, with the help of regulator(s), the water heated in the heat-pump circuit is supplied as delivery water into the heating unit and/or the air heat exchanger, and the return water is directed to the air heat exchanger, where this supplied water is cooled down by the outdoor air to the temperature maximally close to the operating fluid boiling point of the first stage heat pump; moreover, to this heat pump the cooled-down water from the air heat exchanger is supplied, and the air heated in it is directed to the space being heated.

6. The heating method according to claim 5, **characterized in that** the outdoor air before being supplied to the air heat exchanger is warmed-up in the air checker by the warm air removed from the heated space.

Fig. 1

Fig.2

$\varphi_{average}$ (for stages $1 - 6$) = 3.44

Fig. 3

Fig. 4

Fig. 5

Fig. 6

## INTERNATIONAL SEARCH REPORT

| International application No. |
|---|
| PCT/RU2011/000811 |

**A. CLASSIFICATION OF SUBJECT MATTER**
F24D 3/08 (2006.01)F24D 3/18 (2006.01)F25B 30/00 (2006.01)

According to International Patent Classification (IPC) or to both national classification and IPC

**B. FIELDS SEARCHED**

Minimum documentation searched (classification system followed by classification symbols)
F24D 3/00-3/18, F25B 30/00, 29/00, F01K 17/00-17/02

Documentation searched other than minimum documentation to the extent that such documents are included in the fields searched

Electronic data base consulted during the international search (name of data base and, where practicable, search terms used)
DEPATISNET, EAPATIS, Esp@cenet, PAJ, RUPAT, RUABRU, RUPAT-OLD, RUABUI, USPTO, WIPO

**C. DOCUMENTS CONSIDERED TO BE RELEVANT**

| Category* | Citation of document, with indication, where appropriate, of the relevant passages | Relevant to claim No. |
|---|---|---|
| A | G. Khainrikh et al. Teplonasosnye ustanovki dlya otopleniya i goryachego vodosnabzheniya. Moscow, Stroiizdat, 1985, p. 53-56 | 1-6 |
| A | RU 2364794 C1 (KIOSOV ANATOLII DMITRIEVICH) 20.08.2009 | 1-6 |
| A | RU 2382281 C1 (ROSSISKAYA AKADEMIYA SELSKOKHOZYAISTVENNYKH NAUK GOSUDARSTVENNOE NAUCHNOE UCHREZHDENIE VSEROSSIISKII NAUCHNO-ISSLEDOVATELSKII INSTITUT ELEKTRIFIKATSII SELSKOGO KHOZYAISTVA (GNU VIESKH ROSSELKHOZAKADEMII)) 20.02.2010 | 1-6 |
| A | EA 200900449 A1 (MALAKHOV ANATOLII IVANOVICH) 30.12.2009, FIG. 1 | 1-6 |
| A | CN 101793449 A (GUANGDONG MIDEA ELECTRIC APLNC) 04.08.2010, THE ABSTRACT | 1-6 |
| A | RU 2239129 C1 (STENIN VALERII ALEKSANDROVICH)27.10.2004 | 1-6 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 January 2012(10.01.2012) | 19 January 2012(19.01.2012) |

| Name and mailing address of the ISA/ RU | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2083932

- RU 2161759

**Non-patent literature cited in the description**

- **G. HEINRICH ; H. NAIROCK ; V. NESTLER.** *Heat Pump Plants for Heating and Hot Water Supply,* 1985, 53-56